# EUROPÄISCHE PATENTSCHRIFT

(11) **EP 1 524 142 B1**
(45) Veröffentlichungstag und Bekanntmachung des Hinweises auf die Patenterteilung: **07.06.2006**
(21) Anmeldenummer: 04015468.4
(22) Anmeldetag: 01.07.2004
(51) Int. Cl.: B60J 7/22

(54) **Ausstellbare Flaplamelle**
Adjustable flap
Lamelle réglable

(30) Priorität: 14.10.2003 DE 10347576
(43) Veröffentlichungstag der Anmeldung: 20.04.2005
(73) Patentinhaber: Dr. Ing. H.C.F. Porsche Aktiengesellschaft, 70435 Stuttgart (DE)
(72) Erfinder: Czechtizki, Timo, 73119 Zell u. A. (DE)

(56) Entgegenhaltungen:
- DE-A- 19 626 937
- GB-A- 2 079 697
- US-A- 3 922 032
- US-A- 5 971 472
- US-B1- 6 273 501

## Beschreibung

Die Erfindung bezieht sich auf eine ausstellbare Flaplamelle an einem in einem vorderen Bereich einer Fahrzeugdachöffnung ausstellbaren Windabweiser nach dem Oberbegriff des Patentanspruchs 1.

Aus der DE 202 17 130 U1 ist eine Stellvorrichtung für einen Zusatzwindabweiser bekannt, der über eine Stellvorrichtung betätigbar ist, in der Weise, dass über mit einer Umlenkrolle verbundene Seilzüge der Zusatzwindabweiser in eine verdeckte Ruhestellung und in eine herausragende Betriebsstellung verstellbar ist.

Aufgabe der Erfindung ist es, eine ausstellbare Flaplamelle zur Vermeidung von störenden Schwingungen wie Wummergeräusche im Fahrgastraum zu verhindern und eine Betätigung der Flaplamelle zu schaffen, die über eine Stellvorrichtung in einfacher Weise von einer Ruhe- in eine Betriebsstellung und zurück verschwenkbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass über die Stellvorrichtung die Flaplamelle von der Ruhestellung in die Betriebsstellung in der Weise verstellbar ist, dass in der Betriebsstellung eine Totpunktlage erreicht wird, in der der mit der Flaplamelle verbundene Seilzug durch einen Drehpunkt einer Umlenkrolle der Stellvorrichtung verläuft. Hierdurch wird der Seilzugantrieb entlastet. Insbesondere ist nach der Erfindung vorgesehen, dass die Stellvorrichtung eine durch ein Seil betätigte Umlenkrolle umfasst, die ein mit der Flaplamelle verbundenes und unter Federspannung einer Rückstellfeder an der Flaplamelle bestehendes Zugseil aufweist. Das Zugseil der Umlenkrolle ist in der aufrechten Betriebsstellung der Flaplamelle in einer Totpunktstellung angeordnet und die Umlenkrolle stützt sich an einem Blattfederelement ab, das vorgespannt wird.

Um die Totpunktstellung des mit der Flaplamelle verbundenen Zugseils zu erreichen, ist nach der Erfindung des Weiteren vorgesehen, dass in der Grundstellung der Flaplamelle das Zugseil in einem Abstand zur Drehachse an der Umlenkrolle in einem Befestigungspunkt gehalten ist und dass in der Betriebsstellung der Flaplamelle das Zugseil durch den Drehpunkt der Umlenkrolle verläuft. Durch diese Lage der Befestigung des Seilzuges an der Umlenkrolle kann erst die Totpunktstellung erzielt werden. Damit die Umlenkrolle nicht über die Totpunktstellung hinaus verdreht werden kann, ist ein Blattfederelement vorgesehen, das sich an einer Stützrippe des Behältnisses abstützt und die Drehbewegung der Umlenkrolle hemmt. Die Umlenkrolle drückt gegen die Blattfeder und spannt diese, bis die Blattfeder an der Stützrippe anliegt, was der Totpunktstellung entspricht. Die Umlenkrolle ist in der Betriebsstellung der Flaplamelle am freien Ende des Blattfederelements abgestützt und die Blattfeder weist in dieser Betriebsstellung eine Federvorspannung auf. Gleichzeitig dient das Blattfederelement in vorteilhafter Weise auch dazu, die Flaplamelle von der Betriebsstellung in die Ruhestellung zu überführen, indem das vorgespannte Blattfederelement die Umlenkrolle in eine Drehbewegung über den Totpunkt hinweg zu bewegen sucht.

Insbesondere ist nach der Erfindung vorgesehen, dass die Stellvorrichtung in einem Behältnis angeordnet ist, welches im vorderseitigen Bereich die Flaplamelle in einer Drehwelle lagert, die eine Rolle für das Zugseil trägt und auf dem die Rückstellfeder angeordnet ist. Diese stützt sich mit einem Ende am Behältnis ab und mit ihrem anderen abgekehrten Ende ist die Feder unter Federvorspannung am Trägeransatz der Flaplamelle anliegend. Durch diese Anordnung in einem Behältnis wird in vorteilhafter Weise nach der Erfindung erreicht, dass eine kompakte Baueinheit mit Stellvorrichtung und Flaplamelle erzielt wird, die mit dem Windabweiser in einfacher Weise verbindbar ist.

Ein Ausführungsbeispiel der Erfindung ist in den Zeichnungen dargestellt und wird im Folgenden näher erläutert. Es zeigen
- Fig. 1: eine schaubildliche Darstellung einer Flaplamelle mit Stellvorrichtung in einem Behältnis,
- Fig. 2: eine Draufsicht auf die Stellvorrichtung mit eingeklappter Flaplamelle,
- Fig. 3: eine schaubildliche Darstellung auf die eingeklappte Flaplamelle unterhalb eines Windabweisers gem. Fig. 2,
- Fig. 4: eine Draufsicht auf die Stellvorrichtung bei sich ausdrehender Flaplamelle,
- Fig. 5: eine schaubildliche Darstellung auf die sich ausdrehende Flaplamelle vor dem Windabweiser gem. Fig. 4,
- Fig. 6: eine Draufsicht auf die Stellvorrichtung bei vollständig ausgedrehter Flaplamelle in einer Totpunktstellung und
- Fig. 7: eine schaubildliche Darstellung auf die Flaplamelle in einer Betriebsstellung gem. Fig. 6.

An einem Windabweiser 1 eines Schiebedachs für ein Kraftfahrzeug ist mindestens eine Flaplamelle 2 angeordnet, die über eine Stellvorrichtung 3 betätigt wird und von einer verdeckten Ruhestellung bzw. Grundstellung I in eine vorragende Betriebsstellung II verstellbar ist. Die Stellvorrichtung 3 umfasst im Wesentlichen eine Umlenkrolle 4, welche von einem Seilzug 5 angetrieben bzw. betätigt wird. Mit der Umlenkrolle 4 ist des Weiteren ein Zugseil 6 über einen Befestigungspunkt 7 verbunden, das mit der Flaplamelle 2 zusammenwirkt.

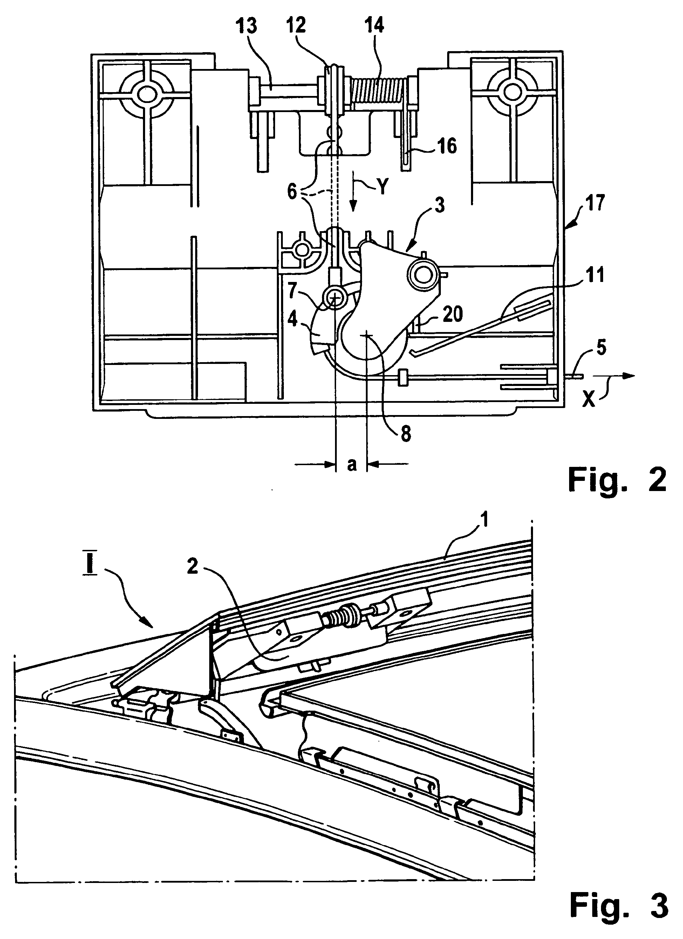

Die Flaplamelle ist über den Seilzug 5 von der unterhalb des Windabweisers 1 angeordneten verdeckten Ruhestellung I (Fig. 3) in mehreren Schritten kontinuierlich in die über den Windabweiser 1 herausragende Betriebsstellung II (Fig. 7) verstellbar.

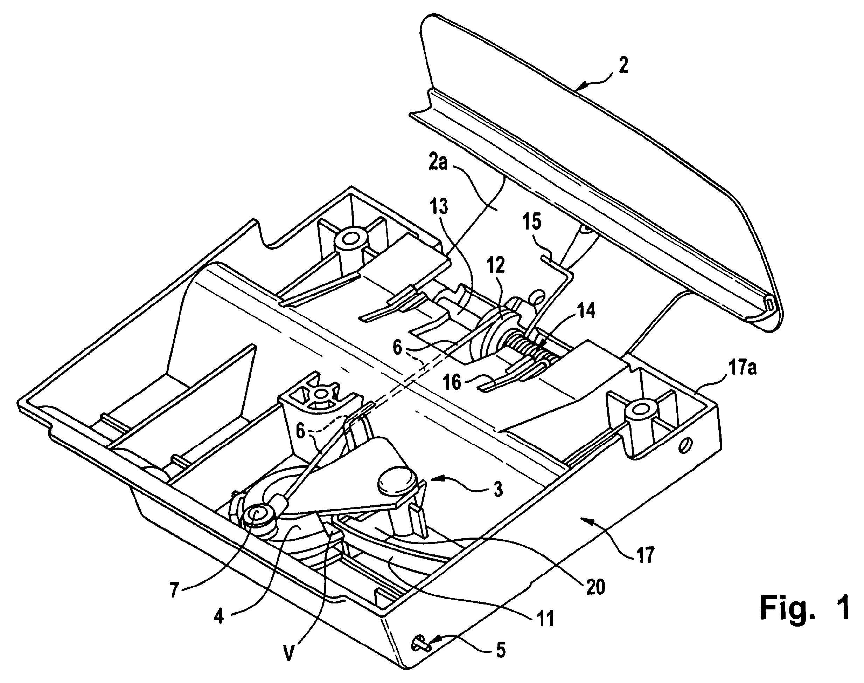

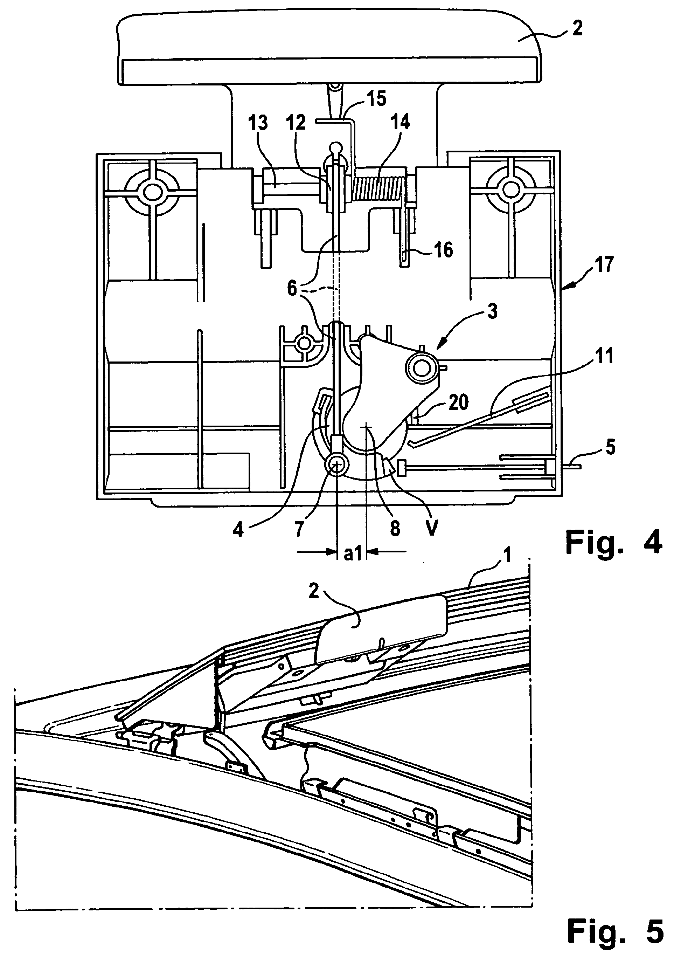

Wie in den Fig. 2 und 4 näher dargestellt, ist das Zugseil 6 bei eingefahrener Flaplamelle 2 an der Umlenkrolle 4 mit einem Abstand a bzw. a1 zur Drehachse 8 im Befestigungspunkt 7 gehalten. Ferner ist das Zugseil 6, wie Fig. 1 näher zeigt, mit einer Rolle 12 verbunden, die auf einer Drehwelle 13 der Flaplamelle 2 angeordnet ist. Auf dieser Drehwelle 13 ist eine Rückstellfeder 14 gehalten, die sich unter Federspannung mit einem Ende 15 an der Flaplamelle 2 abstützt. Das abgekehrte andere Ende 16 der Rückstellfeder 14 stützt sich an einem die Stellvorrichtung 3 aufnehmenden Behältnis 17 ab.

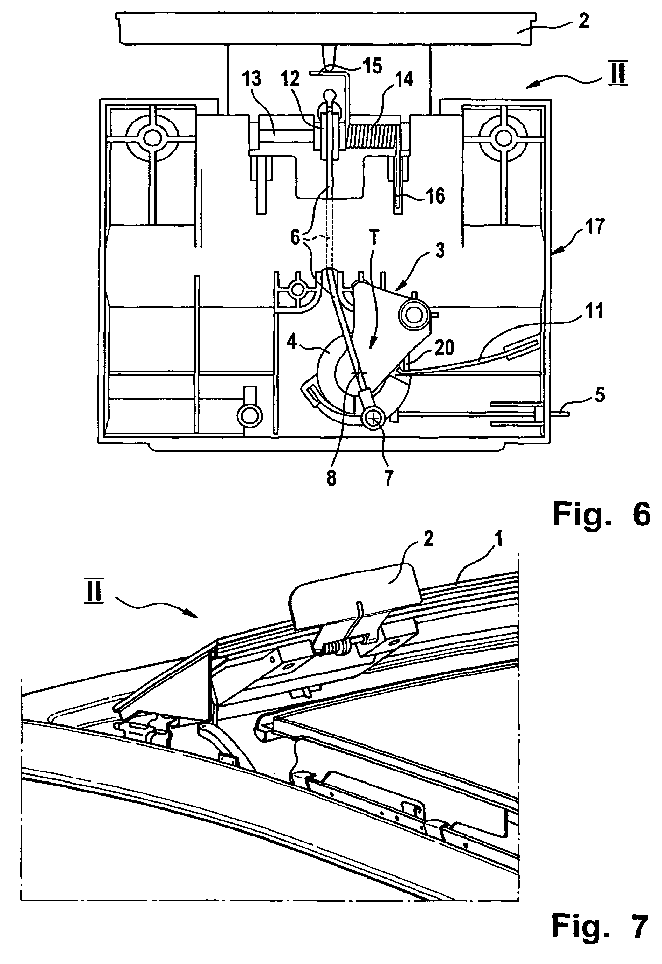

Das Aufrichten der Flaplamelle erfolgt durch einen Antrieb des Seilzugs 5 in Pfeilrichtung X, wodurch das Zugseil 6 sich in Pfeilrichtung Y bewegt und der Befestigungspunkt 7 das Seil 6 in eine Lage durch den Drehpunkt 8 der Umlenkrolle 4 verlegt. Somit ist der Hebelarm a bzw. a1 = 0. Es besteht eine sogenannte Totpunktstellung T (Fig. 6). In dieser Stellung steht die Flaplamelle 2 in der Betriebsstellung II, das heißt, sie ragt über den Windabweiser 1 hinaus.

Durch die Lage des Seiles 6 über den Drehpunkt 8 der Umlenkrolle 4 ist der Seilzug 5 und somit der Antrieb entlastet. Damit beim Schließen des Systems der Seilzug 6 wieder aus der Totpunktstellung T herausdrückbar ist, ist ein Blattfederelement 11 der Umlenkrolle 4 zugeordnet, das in der Betriebsstellung II der Flaplamelle 2 vorgespannt ist. Dieses Blattfederelement 11 stützt sich unter Federvorspannung an einer Stützrippe 20 des Behältnisses 17 ab, die entsprechend zur Totpunktstellung T angeordnet ist.

Die Stellvorrichtung 3 ist in dem Behältnis 17 angeordnet, in dem auch die Flaplamelle 2 verstellbar auf der Drehwelle 13 gelagert ist. Zum Verschwenken der Flaplamelle 2 ragt ein Trägeransatz 2a durch eine Behälterwandung 17a des Behältnisses 17 und kann sich in der Ruhestellung I unterhalb des Behältnisses 17 ablegen. Dieses ist mit dem Windabweiser 1 als eine Baueinheit verbindbar, indem die offene Seite des Behältnisses 17 dem Windabweiser 1 zugerichtet und abgedeckt ist.

Die Funktion der Flaplamelle 2 von der eingeklappten Ruhestellung I bis zur ausgefahrenen Betriebsstellung II wird in folgenden Schritten durchgeführt.

Die Flaplamelle 2 ist eingeklappt (Fig. 2) und wird nachfolgend durch den Antrieb des Seilzugs 5 herausgedreht, wobei sich die Umlenkrolle 4 dreht. Dadurch wird das Zugseil 6 gespannt und die Flaplamelle 2 verdreht sich gegen die Rückstellfeder 14. Die Flaplamelle 2 dreht weiter aus und steht unmittelbar unter dem Windabweiser 1 (Fig. 4 und 5) also noch ohne Windlast. Je weiter die Flaplamelle nun ausgedreht wird, desto höher wird auch die Windlast. Dem entgegen wirkt der nun mit steigendem Drehwinkel der Umlenkrolle 4 kleiner werdende Hebelarm des Zugseiles 6. Dies bewirkt keine ansteigende Kraft für den Antrieb des Seilzugs 5.

Die Flaplamelle 2 ist nun in der Betriebsposition II vollständig ausgedreht. In dieser Position II steht die Flaplamelle 2 im Wind und ist so der vollen Windlast ausgesetzt. Das Zugseil 6 verläuft in dieser Position 2 durch den Drehpunkt 8 der Umlenkrolle 4. Somit ist der Hebelarm des Zugseils 6 gleich 0 und durch diese Totpunktstellung T ist der Antrieb des Seilzugs 5 entlastet. Das Blattfederelement 11 wird benötigt, um beim Schließen des Systems das Zugseil 6 aus der Totpunktstellung T wieder herauszudrücken.

## Patentansprüche

1. Ausstellbare Flaplamelle an einem in einem Vorderbereich einer Fahrzeugdachöffnung ausstellbaren Windabweisers, wobei die Flaplamelle über eine Stellvorrichtung von einer eingeschwenkten unterhalb des Windabweisers angeordneten Grundstellung in eine hochgeschwenkte und vor dem Windabweiser angeordnete Betriebsstellung verschwenkbar ist, und die Stellvorrichtung (3) eine durch ein Seilzug (5) betätigte Umlenkrolle (4) umfasst, die ein mit der Flaplamelle (2) verbundenes und unter Federspannung einer Rückstellfeder (14) an der Flaplamelle (2) stehendes Zugseil (6) aufweist, **dadurch gekennzeichnet, dass** die Umlenkrolle (4) in der aufrechten Betriebsstellung (II) der Flaplamelle (2) in einer Totpunktstellung (T) angeordnet und an einem Blattfederelement (11) abgestützt ist.

2. Ausstellbare Flaplamelle nach Anspruch 1, **dadurch gekennzeichnet, dass** in der Grundstellung (I) der Flaplamelle (2) das Zugseil (6) in einem Abstand (a, a1) zur Drehachse (8) in der Umlenkrolle (4) im Befestigungspunkt (7) gehalten ist und dass in der Betriebsstellung (II) das Zugseil (6) durch den Drehpunkt (8) der Umlenkrolle (4) verläuft.

3. Ausstellbare Flaplamelle nach den Ansprüchen 1 oder 2, **dadurch gekennzeichnet, dass** die Umlenkrolle (4) in der Betriebsstellung (II) der Flaplamelle (2) am freien Ende des Blattfederelements (11) abgestützt gehalten ist und dieses in der Betriebsstellung (II) eine Federvorspannung aufweist.

4. Ausstellbare Flaplamelle nach den Ansprüchen 1, 2 oder 3, **dadurch gekennzeichnet, dass** die Umlenkrolle (4) einen Vorsprung (V) aufweist, über den sich die Umlenkrolle (4) am freien Ende des Blattfederelements (11) abstützt und dieses in der Totpunktstellung (T) an einer ortsfesten Stützrippe (20) federnd vorgespannt anliegt.

5. Ausstellbare Flaplamelle nach einem der vorhergehenden Ansprüche, **dadurch gekennzeichnet, dass** die Stellvorrichtung (3) in einem Behältnis (17) angeordnet ist, dessen vorderseitiger Bereich (Wandung 17a) die Flaplamelle (2) auf einer Drehwelle (13) gelagert ist, die eine Rolle (12) für das Zugseil (6) trägt und auf dem die Rückstellfeder (14) angeordnet ist, welche sich mit einem Ende (16) am Behältnis (17) abstützt und mit ihrem anderen Ende (15) unter Federvorspannung am Trägeransatz (2a) der Flaplamelle (2) anliegt und die Flaplamelle (2) und die Grundstellung (I) zu verdrehen sucht.

## Claims

1. A push-out flap on a draught deflector, the draught deflector capable of being pushed out in a forward region of an opening in a vehicle roof, wherein the flap is pivotable by way of a setting device from a pivoted-in normal position situated below the draught deflector into a pivoted-up operating position situated in front of the draught deflector, and the setting device (3) comprises a deflecting roller (4) which is actuated by a cable-traction means (5) and which has a traction cable (6) which is connected to the flap (2) and which is stressed by a pull-back spring (14) on the flap (2), **characterized in that** the deflecting roller (4) is situated in a dead-centre position (**T**) in the upright operating position (**II**) of the flap (2) and it is supported on a leaf-spring element (11).

2. A push-out flap according to Claim 1, **characterized in that** in the normal position (I) of the flap (2) the traction cable (6) is held in the deflecting roller (4) at the fastening point (7) at a distance (**a, a1**) from the axis of rotation (8), and in the operating position (**II**) the traction cable (6) extends through the centre of rotation (8) of the deflecting roller (4).

3. A push-out flap according to Claims 1 or 2, **characterized in that** in the operating position (**II**) of the flap (2) the deflecting roller (4) is held supported on the free end of the leaf-spring element (11) and in the operating position (**II**) the said leaf-spring element (11) is pre-stressed by a spring.

4. A push-out flap according to Claims 1, 2 or 3, **characterized in that** the deflecting roller (4) has a projection (**V**), by way of which the deflecting roller (4) is supported at the free end of the leaf-spring element (11), and in the dead-centre position (**T**) the said leaf-spring element (11) rests against a stationary support rib (20) in a resiliently pre-stressed manner.

5. A push-out flap according to any one of the preceding Claims, **characterized in that** the setting device (3) is arranged in a container (17), [in] the forward region (wall 17a) of which the flap (2) is mounted on a rotating shaft (13) which carries a roll (12) for the traction cable (6) and on which is arranged the pull-back spring (14) which is supported at one end (16) on the container (17) and rests with its other end (15), pre-stressed by a spring, on the carrier attachment (2a) of the flap (2) and seeks to twist the flap (2) and the normal position (**I**).

## Revendications

1. Lamelle de volet orientable sur un déflecteur orientable dans une zone avant d'une ouverture de toit de véhicule, la lamelle de volet étant basculée au moyen d'un dispositif de positionnement d'une position de base basculée vers l'intérieur et disposée au-dessous du déflecteur dans une position de service basculée vers le haut et disposée devant le déflecteur, et le dispositif de positionnement (3) comprenant une poulie de renvoi (4) actionnée par commande par câble (5), qui présente un câble de traction (6) relié à la lamelle de volet (2) et maintenu sous tension d'un ressort de rappel (14) sur la lamelle de volet (2), **caractérisée en ce que** la poulie de renvoi (4) est disposée dans la position de service (II) verticale de la lamelle de volet (2) dans une position de point mort (T) et est soutenu sur un élément de ressort à lame (11).

2. Lamelle de volet orientable selon la revendication 1, **caractérisée en ce que**, dans la position de base (I) de la lamelle de volet (2), le câble de traction (6) est maintenu à une distance (a, a1) de l'axe de rotation (8) dans la poulie de renvoi (4) au point de fixation (7) et **en ce que**, dans la position de service (II), le câble de traction (6) passe par le point de rotation (8) de la poulie de renvoi (4).

3. Lamelle de volet orientable selon la revendication 1 ou 2, **caractérisée en ce que** la poulie de renvoi (4) est maintenue dans la position de service (II) de la lamelle de volet (2) soutenu sur l'extrémité libre de l'élément de ressort à lame (11) et cet élément présente une pré-tension de ressort dans la position de service (II).

4. Lamelle de volet orientable selon la revendication 1, 2 ou 3, **caractérisée en ce que** la poulie de renvoi (4) présente une saillie (V), par laquelle la poulie de renvoi (4) s'appuie sur l'extrémité libre de l'élément de ressort à lame (11) et appuie celle-ci dans la position de point mort (T) sur une nervure d'appui (20) fixe pré-tendue de façon élastique.

5. Lamelle de volet orientable selon l'une quelconque des revendications précédentes, **caractérisée en ce que** le dispositif de positionnement (3) est disposé dans un récipient (17), dont la zone côté avant (paroi 17a) est fixée dans la lamelle de volet (2) sur un arbre de rotation (13) qui porte une poulie (12) pour le câble de traction (6) sur lequel est disposé le ressort de rappel (14), qui s'appuie par une extrémité (16) sur le récipient (17) et s'appuie par son autre extrémité (15) sous pré-tension de ressort sur l'embase support (2a) de la lamelle de volet (2) et cherche à faire tourner la lamelle de volet (2) dans la position de base (I).
